# FASCICULE DE BREVET EUROPEEN

(11) **EP 1 971 882 B1**
(45) Date de publication et mention de la délivrance du brevet: **12.12.2012**
(21) Numéro de dépôt: 07703741.4
(22) Date de dépôt: 09.01.2007
(51) Int. Cl.: G01V 3/15

(54) **DISPOSITIF DE MESURE GÉOPHYSIQUE POUR L'EXPLORATION DES RESSOURCES NATURELLES DU SOL EN DOMAINE AQUATIQUE.**
GEOPHYSIKALISCHES MESSGERÄT ZUR ERFORSCHUNG VON NATÜRLICHEN BODENRESSOURCEN IM WASSER
GEOPHYSICAL MEASUREMENT DEVICE FOR THE EXPLORATION OF NATURAL RESOURCES OF THE FLOOR IN AN AQUATIC DOMAIN

(30) Priorité: 09.01.2006 FR 0600171
(43) Date de publication de la demande: 24.09.2008
(73) Titulaire: Université de Bretagne Occidentale, 29238 Brest Cedex 3 (FR); Centre National de la Recherche Scientifique (CNRS), 75794 Paris Cedex 16 (FR)
(72) Inventeur: D'EU, Jean-François, F-29840 Lanildut (FR); CAIRNS, Graeme, Houston, Texas, USA 77056 (US); TARITS, Pascal, F-29820 Guilers (FR); JEGEN-KULCSAR, Marion, D-51381 Leverkusen (DE); DUBREULE, Alain, F-29290 Saint Renan (FR)
(74) Mandataire: Bioret, Ludovic
(86) Numéro de dépôt international: PCT/EP2007/050192
(87) Numéro de publication internationale: WO 2007/080167

(56) Documents cités:
- US-A- 5 770 945
- TYCE R ET AL: "Trawl-safe profiler development at SACLANT centre for shallow water environmental assessment and real time modeling" OCEANS 2000 MTS/IEEE CONFERENCE AND EXHIBITION SEPT. 11-14, 2000, PISCATAWAY, NJ, USA,IEEE, vol. 1, 11 septembre 2000 (2000-09-11), pages 99-104, XP010520410 ISBN: 0-7803-6551-8
- DATABASE COMPENDEX [Online] ENGINEERING INFORMATION, INC., NEW YORK, NY, US; 1998, EARLE MARSHALL D ET AL: "Hand-deployable wave buoy utilizing triaxial accelerometer, angular rate, and magnetometer sensors" XP002402741 Database accession no. EIX98424348231 & PROC INT SYMP OCEAN WAVE MEAS ANAL; PROCEEDINGS OF THE INTERNATIONAL SYMPOSIUM ON OCEAN WAVE MEASUREMENT AND ANALYSIS 1998 ASCE, RESTON, VA, USA, vol. 2, 3 novembre 1997 (1997-11-03), pages 1213-1226,

## Description

### 1. Domaine

Le domaine de l'invention est celui de l'exploration des propriétés géophysiques du sous-sol d'un milieu aquatique.

Plus précisément, l'invention concerne un dispositif de mesure permettant d'établir, à partir d'une approche magnétotellurique, une cartographie de la distribution de la conductivité électrique du sous-sol d'un tel milieu, notamment dans un environnement marin. L'invention est destinée plus spécifiquement à être mise en oeuvre dans le cadre de missions de prospection précédant l'exploitation des ressources naturelles du sous-sol, et en particulier dans la recherche de gisements de pétrole et de gaz.

### 2. Etat de l'Art

Il est très largement admis que les ressources naturelles du sous-sol des mers, des océans, et des lacs de grande étendue sont potentiellement très importantes.

Cependant, ces ressources restent pour certaines non reconnues ou non exploitées du fait des obstacles techniques créés par la présence de grandes profondeurs d'eau.

Les méthodes de prospection directes ou par forage, fréquentes dans le cadre de l'exploration terrestre, s'avèrent de toute évidence difficilement transposables au milieu aquatique si on considère les impératifs techniques et les coûts liés à l'utilisation de telles méthodes.

C'est pourquoi, des méthodes de prospection indirectes sont généralement employées, permettant de déduire la nature géologique du sous-sol à partir de la mesure d'une grandeur physique.

Une première méthode classique de prospection indirecte pour l'exploration des ressources naturelles du sous-sol en milieu aquatique utilise une mesure de la propagation d'une onde sismique, obtenue par exemple par la déflagration d'une charge explosive sous la surface de l'eau, après réflexion de celle-ci sur les différentes couches du sous-sol du domaine aquatique. Cependant, l'interprétation des résultats obtenus par cette méthode reste délicate dans certains contextes géologiques, c'est-à-dire par exemple en présence de dômes de sels, de coulées basaltiques épaisses ou de structures géologiques très complexes.

La tendance actuelle est ainsi à généraliser l'utilisation d'une deuxième méthode de prospection indirecte par mesure magnétotellurique passive de la conductivité électrique du sous-sol sous l'étendue d'eau. Cette méthode est désignée par méthode magnétotellurique (MT). Connue et utilisée depuis de nombreuses années pour évaluer les ressources naturelles du sous-sol terrestre, ce n'est que récemment qu'elle fut mise en oeuvre dans un environnement aquatique et notamment sur le plateau continental en domaine marin, grâce à l'évolution des moyens d'acquisition et de traitement des données. Elle offre en outre l'intérêt de n'avoir aucun impact sur l'environnement puisque c'est une méthode passive.

La conductivité électrique du sol varie avec la nature minéralogique des roches, et dépend entre autres de la température, de la pression. Elle est en outre très sensible à la présence d'inclusions conductrices telles que l'eau hydrothermale, les saumures associées aux gisements pétroliers, les métaux et les sels métalliques sous forme de sulfures par exemple, tout comme au degré de connectivité de ces inclusions. Ainsi, une mesure de la conductivité électrique permet d'identifier les unités géologiques et la porosité relative des roches constitutives.

Cette méthode utilise la mesure des fluctuations naturelles des champs géoélectriques et géomagnétiques horizontaux pour déterminer une impédance de surface. Cette impédance, encore appelée impédance magnétotellurique, obtenue sur une large gamme de fréquences, permet dès lors de déterminer la distribution de la conductivité électrique sous la surface du sol.

On note qu'afin de permette une cartographie convenable des couches géologiques du sol, on peut compléter les informations provenant de la mesure de la conductivité électrique par d'autres interprétations issues de données sismiques ou gravimétriques.

Un problème rencontré avec cette méthode est que, dans l'eau de mer, les fréquences supérieures à quelques millièmes de Hertz sont rapidement atténuées avec la distance ou la profondeur. Ceci conduit à une perte considérable de la puissance du champ électrique et du champ magnétique pour ces fréquences. En conséquence, dès que l'on s'éloigne de la surface du fond du domaine marin, il devient rapidement impossible d'effectuer une mesure acceptable dans la gamme de fréquence (de 0,01 à 100 Hertz) utile à l'interprétation de la nature des couches géologiques.

Une première solution à ce problème est présentée dans le document US 5770945. Ce document propose d'effectuer une mesure des composantes horizontales des champs électriques et magnétiques naturels à partir d'un instrument autonome reposant sur le fond marin et comprenant au moins deux capteurs magnétiques.

Un premier inconvénient de cette solution technique est de ne mesurer que les composantes horizontales des champs électriques et magnétiques, ce qui ne permet pas de décrire précisément des sous-sols de composition complexe.

Pour pallier cet inconvénient, le document WO 03/104844 propose d'équiper un instrument conforme au document US 5770945 d'un mât vertical dans lequel sont placées deux électrodes destinées à mesurer la composante verticale du champ électrique. Cette solution technique demeure cependant difficile à réaliser de façon appropriée car la composante verticale du champ électrique présente une intensité faible et difficilement mesurable au niveau du fond marin. D'autre part, une telle mesure est nécessairement perturbée par l'instabilité de la position du capteur.

Un deuxième inconvénient de la solution technique proposée par US 5770945 est la sensibilité des capteurs et par suite de l'instrument aux courants marins présents sur le fond marin.

Un troisième inconvénient provient du type de capteur utilisé, très encombrant et lourd, qui conduit à un poids et à un encombrement excessif de l'instrument, ce qui le rend également plus sensible aux courants marins.

### 3. Objectifs

L'invention a notamment pour objectif de pallier ces inconvénients de l'état de l'art.

Plus précisément, un objectif de l'invention est de fournir un dispositif de mesure géophysique plus performant que les instruments connus mesurant les deux ou trois composantes orthogonales du champ électrique et les composantes horizontales du champ magnétique.

Un deuxième objectif de l'invention est de fournir un dispositif qui, dans au moins un mode de réalisation particulier, soit peu sensible aux effets des courants marins afin d'améliorer la précision sur les mesures du champ magnétique.

Un autre objectif de l'invention est de fournir, dans au moins un mode de réalisation particulier, un dispositif permettant d'évaluer à partir de la mesure des composantes horizontales et verticales du champ magnétique la valeur du vecteur d'induction qui est sensible aux structures géologiques hétérogènes.

L'invention a également pour objectif, dans au moins un mode de réalisation particulier, de fournir une telle technique, qui soit compacte, légère et maniable, afin de faciliter la mise en oeuvre du dispositif.

L'invention a encore pour objectif, dans au moins un mode de réalisation particulier, d'offrir un appareil sous-marin autonome en termes d'acquisition, traitement et transmission des données et des mesures, et dont la remontée vers la surface puisse être commandée à distance.

Un autre objectif de l'invention, dans au moins un mode de réalisation de l'invention, est de fournir un dispositif adapté à la prospection pétrolière en grande profondeur, notamment dans les zones où l'interprétation des données sismiques nécessite des compléments d'information.

Encore un objectif de l'invention, dans au moins un mode de réalisation particulier, est de fournir une unité de cartographie de certaines propriétés magnétotelluriques (conductivité électrique, ...) d'une zone de sous-sol en milieu aquatique comprenant un ensemble de dispositifs selon l'invention disposés suivant une maille sensiblement régulière.

### 4. Exposé de l'invention

Au moins certains de ces objectifs, ainsi que d'autres éventuellement qui apparaîtront par la suite, sont atteints à l'aide d'un dispositif de mesure géophysique pour l'exploration des ressources naturelles du sol en domaine aquatique, comprenant :
- un bâti destiné à reposer de manière stable sur ledit sol dudit milieu aquatique ;
- au moins un caisson de flottabilité reposant sur ledit bâti ; et
- des moyens formant instruments de mesure incluant :
   - au moins un capteur permettant de mesurer localement au moins une des composantes du champ magnétique ;
   - des moyens formant dispositif d'acquisition et de traitement de données analogiques et/ou numériques ; et
   - des moyens formant source d'alimentation en énergie dudit capteur et desdits moyens formant dispositif d'acquisition et de traitement de données.

Selon l'invention, ledit capteur est contenu à l'intérieur dudit caisson de flottabilité.

Il est à noter que le capteur étant dans le caisson, le dispositif présente une surface frontale pouvant être soumise à une force de poussée hydrodynamique moins importante, ce qui permet ainsi de limiter l'influence des courants marins sur la mesure du champ magnétique.

En outre, un tel dispositif forme en général un ensemble plus compact qu'un dispositif de mesure géophysique comprenant au moins un caisson et des moyens formant instrument de mesure incluant un capteur placé hors de ce caisson de flottabilité.

Avantageusement, ledit capteur comprend des moyens de mesure des trois composantes du champ magnétique.

Ainsi, la mesure des composantes horizontales et de la composante verticale du champ magnétique permet une caractérisation précise des sous-sols de composition complexe.

La mesure de la composante verticale du champ magnétique est en effet particulièrement satisfaisante, car la composante verticale du champ magnétique devient notable en présence de variations latérales importantes de la conductivité électrique, notamment dans la zone d'interface entre un milieu électriquement résistant et un milieu électriquement conducteur, rencontrée à la surface du sol dans le fond marin.

Selon un mode de réalisation avantageux, un tel dispositif comprend un unique caisson de flottabilité, et en outre lesdits moyens formant dispositif d'acquisition et de traitement de données et lesdits moyens formant source d'alimentation en énergie sont compris dans cet unique caisson de flottabilité.

Ainsi, le dispositif présente un aspect généralement compact, ce qui facilite son stockage, son transport et sa mise en oeuvre.

Selon une variante avantageuse de l'invention, un tel dispositif comprend au moins deux caissons de flottabilité, ledit capteur, lesdits moyens formant dispositif d'acquisition et de traitement de données et lesdits moyens formant source d'alimentation en énergie étant compris dans l'un des caissons.

Ainsi, en plaçant les moyens formant dispositif d'acquisition et de traitement de données et les moyens formant source d'alimentation en énergie dans l'un des caissons, on réduit les mouvements du dispositif induits par les courants marins, ce qui permet d'améliorer la précision sur les mesures du champ magnétique.

Selon une autre variante avantageuse de l'invention, un tel dispositif comprend au moins deux caissons de flottabilité, ledit capteur, lesdits moyens formant dispositif d'acquisition et de traitement de données et lesdits moyens formant source d'alimentation en énergie étant répartis dans au moins deux des caissons.

Ainsi, il est possible d'optimiser le volume de chaque caisson pour réduire le volume cumulé de l'ensemble des caissons, et donc limiter l'effet des courants marins, ou améliorer la compacité du dispositif.

De façon avantageuse, un tel dispositif comprend un inclinomètre solidaire dudit capteur.

Ainsi l'orientation du capteur magnétique est connue avec précision, ce qui réduit l'incertitude sur les mesures.

Selon une caractéristique préférentielle, le caisson est obtenu à partir d'au moins un matériau amorphe.

Ainsi, on évite de perturber le champ magnétique par utilisation de matériaux magnétiques ou métalliques pour le caisson.

Selon un autre aspect préférentiel, les moyens formant dispositif d'acquisition et de traitement de données analogiques et/ou numériques incluent des moyens de détermination des composantes du vecteur d'induction.

Ainsi, le dispositif est pourvu d'un moyen d'estimer directement le vecteur d'induction et par suite la conductivité électrique du sol.

Préférentiellement, un tel dispositif comprend des moyens de transmission des données et des composantes du vecteur d'induction vers un récepteur distant.

Ainsi, il est possible d'accéder aux valeurs du vecteur d'induction et de l'impédance magnétotellurique en temps réel.

De préférence, les composantes du vecteur d'induction sont déterminées pour au moins deux fréquences distinctes.

Ainsi, on détermine la distribution de la conductivité électrique sous la surface du sol.

Avantageusement, le volume interne du ou des caissons contenant lesdits moyens formant instruments de mesure est sensiblement égal au volume des moyens formant instruments de mesure.

Cette solution technique rend le dispositif très compact tout en limitant la force de poussée hydrodynamique due aux courants marins et par conséquent les incertitudes de mesure sur le champ magnétique.

### 5. Figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- les figures 1A et 1B présentent une vue schématique en perspective, respectivement de dessus et de dessous, d'un dispositif selon un premier mode de réalisation particulier de l'invention ;
- la figure 2A est une vue de détail du magnétomètre compris dans le dispositif des figures 1A et 1B ;
- les figures 2B et 2C sont respectivement une vue simplifiée de l'intérieur du caisson contenant les moyens formant instrument de mesure et une représentation schématique du système d'acquisition et de traitement de données des figures 1A et 1B ;
- la figure 3 illustre de façon schématique un deuxième mode de réalisation du dispositif selon l'invention ;
- les figures 4A et 4B illustrent respectivement une variante du mode de réalisation correspondant aux figures 1A et 1B, et l'influence sur le volume du caisson si le dispositif est réalisé suivant le deuxième mode de réalisation de l'invention ;
- la figure 5 est une vue schématique d'une unité de cartographie des propriétés magnétotelluriques d'une zone du fond marin comprenant un ensemble de dispositifs selon l'invention disposés suivant une maille sensiblement régulière.

### 6. Description

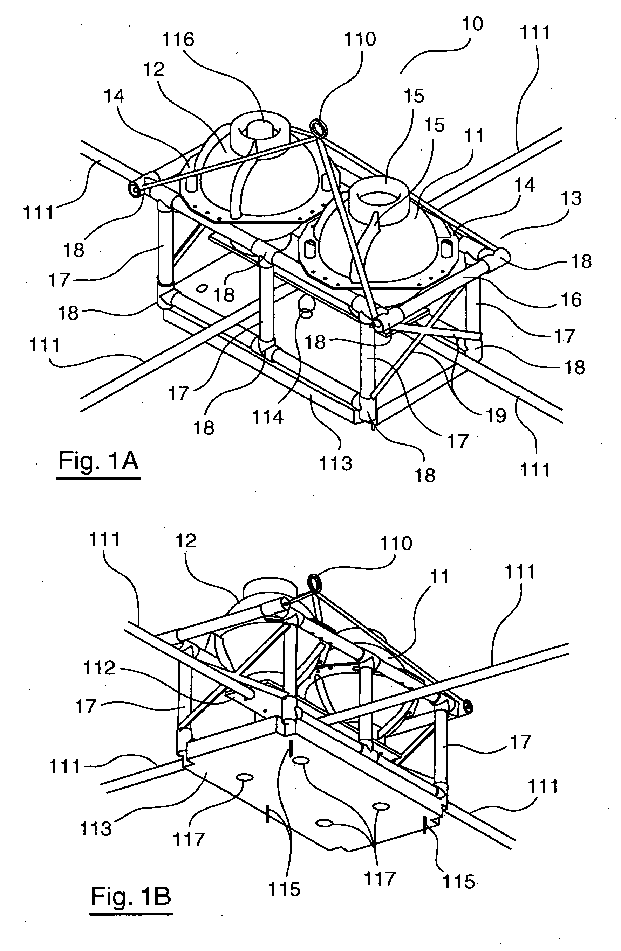

Comme déjà mentionné, l'invention est avantageusement un dispositif de mesure géophysique pour l'exploration des ressources naturelles du sol en domaine aquatique. Le mode de réalisation, décrit par la suite, concerne un dispositif destiné notamment à la prospection pétrolière en grande profondeur et comprenant deux caissons de flottabilité, ainsi que cela est illustré sur les figures 1A et 1B, dans une vue en perspective respectivement de dessus et de dessous.

Le dispositif de mesure géophysique 10 comprend un premier caisson de flottabilité 11, renfermant un capteur magnétique, encore appelé magnétomètre, permettant de mesurer les composantes tridimensionnelles du champ magnétique, et un second caisson de flottabilité 12 montés sur un bâti 13 à structure tubulaire. Les deux caissons étanches 11 et 12 sont identiques dans ce mode de réalisation. Ces caissons 11 et 12 sont de forme générale sensiblement sphérique, cette forme particulière permettant aux parois du caisson de supporter la pression hydrostatique jusqu'à plus de six mille mètres de profondeur. Les caissons sont constitués d'une sphère de verre, non représentée sur les figures 1A et 1B, dont la surface extérieure est protégée par deux demi-coques hémisphériques en plastique rigide en contact au niveau d'un plan de bride 14. Chaque coque de caisson présente des nervures 15 réparties avec homogénéité suivant des lignes parallèles et méridiennes de façon à rigidifier sa structure tout en conservant des épaisseurs de paroi et une masse acceptables.

Afin de ne pas perturber les mesures, les composants du caisson sont en matériaux non magnétiques, de préférence non métalliques, et ne présentant pas de trace de corrosion. Ainsi, l'enceinte du caisson de flottabilité est constituée d'une sphère de verre protégée par une coque en matériau plastique.

Le bâti 13 comprend un cadre 16 sur lequel reposent les caissons 11 et 12 et des pieds 17 permettant au dispositif de reposer verticalement sur le sol du fond marin. Avantageusement, le bâti est ouvert au passage de l'eau afin de limiter les forces de poussée dues aux courants marins sur le dispositif. Ce bâti 13 est réalisé à partir de tubes creux, préférentiellement en polychlorure de vinyle (PVC) ou en polypropylène, assemblés par des noix d'assemblage 18 et est consolidé par des barres de contreventement 19. Avantageusement la section des tubes du bâti est réduite, afin de limiter les perturbations dues aux effets des courants marins sur le capteur de mesure. De même, on peut aussi prévoir de modifier la forme des caissons pour améliorer leur profil hydrodynamique.

Un crochet de manutention 110 pour la mise en eau, permettant de déplacer le dispositif avec une grue, ou tout autre appareil de portage, est fixé au bâti 13 par des sangles.

Deux paires de cannes souples semblables en polypropylène 111 sont fixées à un cadre 112 solidaire des caissons 11 et 12. Ces paires de cannes 111 permettent le passage de câbles étanches et résistant à la pression vers des électrodes impolarisables, non représentées sur les figures 1A et 1B, de type Pb-PbCl2, placées à leurs extrémités libres. L'ensemble constitué des deux électrodes impolarisables d'une même paire de canne 111 constitue ainsi un dipôle électrique.

Avantageusement l'orientation de l'extrémité non-libre des paires de cannes correspond ou est indexée par rapport aux directions des composantes du champ mesuré dans le plan horizontal par le capteur magnétique.

Le volume cumulé des caissons de flottabilité est suffisant pour que l'ensemble constitué des deux caissons 11 et 12, du bâti 13 et des appareils de mesure contenus et/ou fixés sur les caissons et/ou le bâti puisse flotter de façon autonome à la surface de l'eau et remonter de façon autonome à partir du fond marin.

Pour permettre la descente du dispositif au fond d'une mer ou d'un océan, un lest 113 en béton est accroché sous le bâti par un crochet 114. Ce lest 113, qui s'adapte à la forme du bâti est pourvu sous sa base de trois griffes 115 afin d'améliorer la stabilité et l'ancrage du dispositif sur le sol du fond marin, et est ajouré suivant des réservations 117 afin de faciliter la descente de l'instrument.

Le crochet 114 s'ouvre par dissolution électrolytique d'un fil d'inconel, ce qui permet au dispositif d'être détaché du lest 113 et de pouvoir remonter vers la surface du fait de sa propre flottabilité.

Le largage du lest est commandé automatiquement à partir de la surface par l'intermédiaire d'un transpondeur acoustique 116 monté sur la paroi externe du caisson 12. Ce transpondeur transmet une commande à l'alimentation en énergie contenue dans le caisson 11 qui va appliquer une tension de douze Volts entre le fil et un point de masse électrique du dispositif, opérant ainsi la dissolution du fil d'inconel par processus électrolytique après quelques minutes.

Après être remonté à la surface, le dispositif selon l'invention peut être localisé pour être récupéré grâce à une balise haute fréquence (en anglais « very high frequencies » (VHF)) et une torche lumineuse de type Xénon.

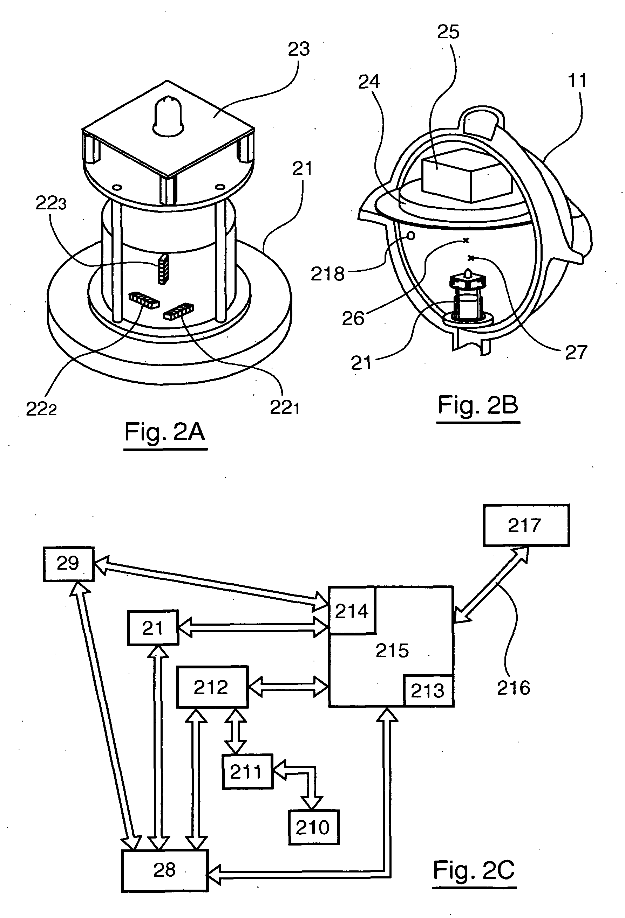

Les moyens formant instruments de mesure, encore appelés appareils de mesure sont présentés en référence aux figures 2A à 2C.

Comme indiqué précédemment, le caisson 11 contient un capteur magnétique 21, permettant de mesurer la valeur du champ magnétique terrestre suivant trois directions orthogonales. Le capteur 21, illustré figure 2A, est préférentiellement un magnétomètre à vanne de flux comprenant trois bobines 22₁, 22₂ et 22₃ orientées suivant trois directions orthogonales alimentées avec une tension de douze Volts. Le magnétomètre 21 permet une mesure relative du champ magnétique par compensation directe du champ magnétique total sur le capteur. Il présente donc une sensibilité et une réponse dynamique acceptables permettant de réaliser une mesure satisfaisante des variations du champ magnétique. En outre, le champ magnétique total étant mesuré par le capteur, l'orientation du capteur est ainsi obtenue avec précision. Il n'est donc pas nécessaire de prévoir un compas pour déterminer la position du capteur.

D'autre part le magnétomètre 21 est avantageusement solidarisé à un inclinomètre bidirectionnel 23 afin de pouvoir obtenir l'inclinaison du capteur avec précision. Ainsi, il ne subsiste pas d'incertitude sur la position du capteur 21.

Les moyens formant dispositif d'acquisition et de traitement de données analogiques et/ou numériques 24, ou système d'acquisition et de traitement de données, et les moyens formant source d'alimentation en énergie du capteur, et du système d'acquisition et de traitement de données 25, encore appelés batteries, sont placées dans le caisson 11 dans ce mode de réalisation préférentiel, comme illustré figure 2B. Pour éviter de perturber les mesures, le capteur 21 a été éloigné des batteries 25.

Afm d'éviter que le dispositif selon l'invention ne soit déstabilisé et se mette à tourner autour de lui-même lors de la remontée, les appareils de mesure sont placés dans le caisson 11 de façon à obtenir que le centre de poussée 26 du dispositif soit placé au-dessus de son centre de gravité 27.

En référence à la figure 2C, Le système d'acquisition et de traitement de données 24 comprend une horloge 28 pour synchroniser l'acquisition des signaux provenant du magnétomètre et des deux dipôles. L'horloge 28 est préférentiellement synchronisée sur le temps du système global de géolocalisation par satellite 29 (en anglais « Global Positioning System » (GPS)).

Les électrodes 210 de chaque dipôle sont connectées à l'intérieur du caisson 11 à des amplificateurs 211 possédant un très bas bruit sur la bande de fréquence utile, s'étendant de zéro à plus de cent Hertz, suivis de convertisseurs analogique-numérique 24bits de type sigma-delta 212, pour s'adapter à la bande de fréquence utile.

Le processus d'acquisition des données est contrôlé par un microprocesseur 213. Ce microprocesseur 213 déclenche l'acquisition des données, dialogue avec l'horloge 28 pour synchroniser les mesures suivant la fréquence d'échantillonnage, et commande la carte d'acquisition 214 permettant la conversion des signaux acquis en données numériques. Le microprocesseur 213 assure par ailleurs le contrôle du transfert des données numériques sur un support de stockage informatique, par exemple une carte mémoire 215 ou un disque dur miniature. Sans sortir du cadre de l'invention, il peut également être envisagé de transmettre les données numériques vers le transpondeur acoustique 116 ou tout autre moyen d'émission ou borne-relais communiquant avec la surface.

Une liaison série 216, réalisée par l'intermédiaire d'une nappe connectée à un passage étanche au travers de la paroi du caisson 11 permet de rapatrier les données stockées sur le support sans ouvrir le caisson vers un ordinateur 217, lorsque le dispositif selon l'invention est remonté à la surface. Cette liaison série 216 peut être remplacée par un moyen de communication sans fil, tel qu'un message radio, un message infrarouge ou tout autre moyen usuel.

À partir de la mesure simultanée des trois composantes du champ magnétique par le magnétomètre 21 et des composantes horizontales du champ électrique par les électrodes 210 du dipôle pour différentes fréquences, le microprocesseur 213 peut exécuter pour chacune des fréquences le calcul des tenseurs définissant l'impédance magnétotellurique, notée par la suite *Z̅*, et le vecteur d'induction, noté *T̅*. L'algorithme de calcul comprend une première étape consistant à déterminer par changement de repère les composantes horizontales Bₓ et B_{y}, et de la composante verticale B_{z} du champ magnétique, à partir des composantes mesurées, ainsi que les composantes horizontales Eₓ et E_{y} du champ électrique, et une deuxième étape de calcul de l'impédance magnétotellurique *Z̅*, et du vecteur d'induction *T̅* à partir des formulations :
- *E_{x,y}* = *Z̅B_{x,y}, E_{x,y}* et *B_{x,y}* représentant les vecteurs formés à partir des composantes horizontales respectivement des champs électriques et magnétiques ; et
- *B_{z} =T̅B_{x,y}.*

Les données de l'impédance magnétotellurique *Z̅*, et du vecteur d'induction *T̅* calculées fournissent ainsi une estimation sur site de la distribution de conductivité électrique du sous-sol.

Les batteries 25 sont préférentiellement une pluralité de batteries rechargeables disposées en parallèle, par exemple de type Li-ion, ce qui permet de recharger les accumulateurs de la batterie 25 sans ouvrir le caisson 11. À cet effet, une traversée étanche 218 reliée aux batteries 25 par un câble de liaison, représentée figure 2B, est prévue dans la paroi du caisson 11.

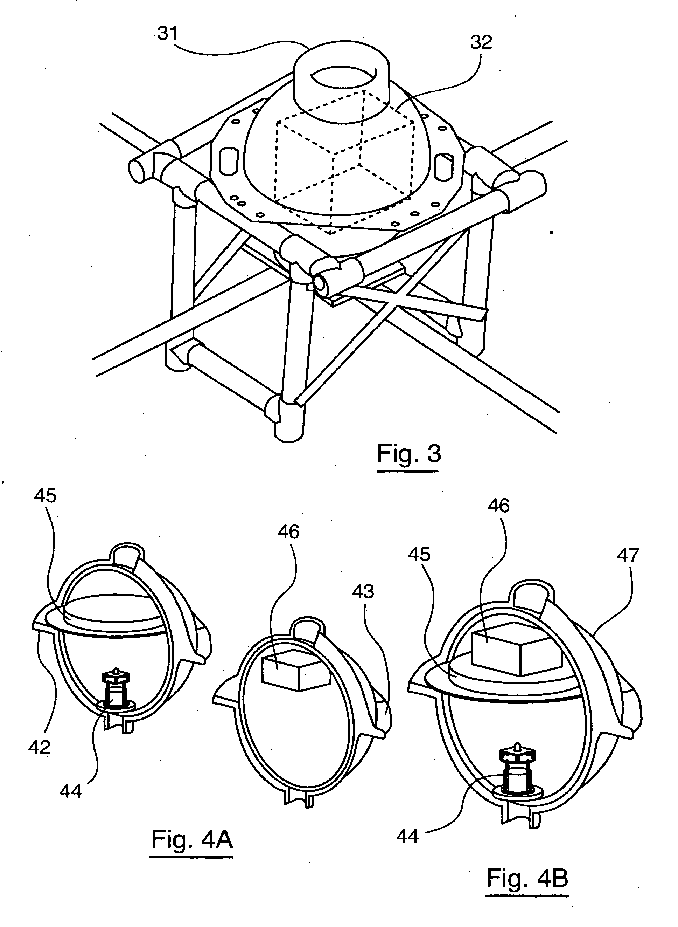

Un deuxième mode de réalisation de l'invention est présenté sur la figure 3. Dans ce mode de réalisation, le dispositif selon l'invention comprend un unique caisson de flottabilité 31. Cette solution technique est adaptée à un ensemble d'appareils de mesure 32, représenté en pointillé sur la figure 3, dont l'encombrement est réduit et qui peut être contenu dans un caisson préférentiellement disponible dans le commerce et distribué par exemple par les sociétés NAUTILUS MARINE SERVICE GmbH, Bremen, Allemagne ou BENTHOS, North Falmouth, Massachusset, Etats Unis d'Amérique. Cette solution compacte facilite en outre le stockage et le transport des dispositifs de mesure. Préférentiellement, le volume interne du caisson 31 est égal au volume des appareils de mesure 32.

Dans une variante de l'invention illustrée figure 4A, les appareils de mesure 41 sont répartis entre deux caissons de flottabilité 42 et 43. Le capteur magnétique 44 et le système d'acquisition et de traitement de données 45 sont dans le caisson 42 et les batteries 46, de tailles plus importantes, sont contenues dans le deuxième caisson 43. Ainsi on réduit l'influence des courants marins sur le dispositif selon l'invention en comparaison d'un mode de réalisation de l'invention pour lequel ce même système de mesure est placé dans un caisson unique 47, représenté figure 4B, de volume nécessairement supérieur au volume cumulé des caissons 42 et 43.

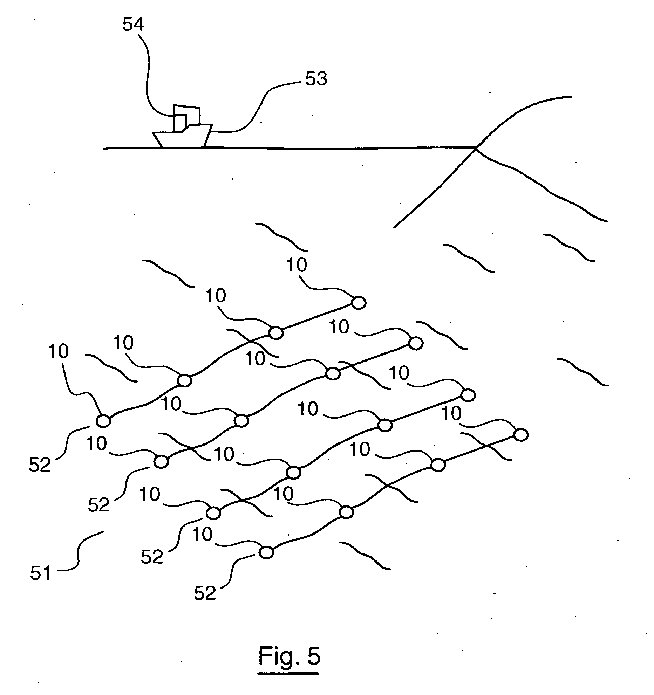

En référence à la figure 5, une unité de cartographie MT 51 d'une zone du fond marin comprenant un ensemble de seize dispositifs 10 selon l'invention est disposée suivant une maille sensiblement régulière sur le sol d'un fond marin. Bien entendu, le nombre de dispositifs 10 d'une unité de cartographie MT peut être adapté à la surface et au relief de la zone de fond marin prospectée. Les dispositifs 10 d'une trame 52 peuvent être reliés à cet effet par des câbles fins et souples et ont été immergés à partir d'un navire 53.

Un émetteur acoustique 54 embarqué sur le navire 53 permet de communiquer avec les transpondeurs acoustiques 116 installés sur le caisson 12 du dispositif 10 pour déclencher la remontée vers la surface de l'unité 51. Le transpondeur peut également transmettre les données recueillies par les dispositifs 10 vers le navire 53 distant.

D'autre part, il peut être envisagé sans sortir du cadre de l'invention :
- de fixer sur le bâti le système d'acquisition et de traitement de données et les batteries dans des enceintes étanches, hors du ou des caisson(s) de flottabilité ;
- d'introduire dans les caissons un gaz léger et neutre tel que par exemple de l'hélium, ou de l'argon, afin d'améliorer la flottabilité du dispositif ;
- de remplir les caissons avec un gaz sous pression afin d'éviter tout dommage du à l'intrusion d'eau sur le système de mesure en cas de défaut d'étanchéité des caissons.

## Revendications

1. Dispositif de mesure géophysique (10) pour l'exploration des ressources naturelles du sol en domaine aquatique, comprenant :
- un bâti (13) destiné à reposer de manière stable sur ledit sol dudit milieu aquatique ;
- au moins un caisson de flottabilité (11) reposant sur ledit bâti ; et
- des moyens formant instruments de mesure incluant :
- au moins un capteur (21) permettant de mesurer localement au moins une des composantes du champ magnétique ;
- des moyens formant dispositif d'acquisition et de traitement de données analogiques et/ou numériques (24); et
- des moyens formant source d'alimentation en énergie dudit capteur et desdits moyens formant dispositif d'acquisition et de traitement de données (25);
**caractérisé en ce que** ledit au moins un capteur (21) est contenu à l'intérieur dudit caisson de flottabilité (11).

2. Dispositif de mesure géophysique selon la revendication 1, **caractérisé en ce que** ledit capteur (21) comprend des moyens de mesure des trois composantes du champ magnétique.

3. Dispositif de mesure géophysique selon l'un quelconque des revendications 1 et 2, **caractérisé en ce qu'**il comprend un unique caisson de flottabilité (31).

4. Dispositif de mesure géophysique selon la revendication 3, **caractérisé en ce que** lesdits moyens formant dispositif d'acquisition et de traitement de données (24) et lesdits moyens formant source d'alimentation en énergie (25) sont compris dans ledit unique caisson de flottabilité (11).

5. Dispositif de mesure géophysique selon l'une quelconque des revendications 1 et 2, **caractérisé en ce qu'**il comprend au moins deux caissons de flottabilité (42,43), ledit capteur (44), lesdits moyens formant dispositif d'acquisition et de traitement de données (45) et lesdits moyens formant source d'alimentation en énergie (46) étant compris dans l'un desdits au moins deux caissons (42,43).

6. Dispositif de mesure géophysique selon l'une quelconque des revendications 1 et 2, **caractérisé en ce qu'**il comprend au moins deux caissons de flottabilité (42,43), ledit capteur (44), lesdits moyens formant dispositif d'acquisition et de traitement de données (45) et lesdits moyens formant source d'alimentation en énergie (46) étant répartis dans au moins deux desdits caissons.

7. Dispositif de mesure géophysique selon l'une quelconque des revendication 1 à 6, **caractérisé en ce qu'**il comprend un inclinomètre (23) solidaire dudit au moins un capteur (21).

8. Dispositif de mesure géophysique selon l'une quelconque des revendications 1 à 7, **caractérisé en ce que** ledit caisson est obtenu à partir d'au moins un matériau amorphe.

9. Dispositif de mesure géophysique selon l'une quelconque des revendications 1 à 8, caractérisé en que lesdits moyens formant dispositif d'acquisition et de traitement de données analogiques et/ou numériques incluent des moyens de détermination des composantes du vecteur d'induction.

10. Dispositif de mesure géophysique selon la revendication 9, **caractérisé en ce qu'**il comprend des moyens de transmission desdites données et desdites composantes du vecteur d'induction vers un récepteur distant (116).

11. Dispositif de mesure géophysique selon l'une quelconque des revendications 9 et 10, **caractérisé en ce que** lesdites composantes du vecteur d'induction sont déterminées pour au moins deux fréquences distinctes.

12. Dispositif de mesure géophysique selon l'une quelconque des revendications 1 à 11, **caractérisé en ce que** le volume interne dudit ou desdits caissons contenant lesdits moyens formant instruments de mesure est sensiblement égal au volume desdits moyens formant instruments de mesure.

## Claims

1. Geophysical measurement device (10) for exploration of the natural resources of the ground in an aquatic environment, comprising:
- a frame (13) intended to rest in stable manner on said ground of said aquatic environment;
- at least one buoyancy tank (11) resting on said frame; and
- means forming measurement instruments including:
- at least one sensor (21) enabling at least one of the components of the magnetic field to be measured locally;
- means forming a device for acquisition and processing of analogue and/or digital data (24); and
- means forming a power-supply source (25) for said sensor and for said means forming a device for acquisition and processing of data;
**characterised in that** said at least one sensor (21) is contained within said buoyancy tank (11).

2. Geophysical measurement device according to Claim 1, **characterised in that** said sensor (21) comprises means for measuring the three components of the magnetic field.

3. Geophysical measurement device according to either of Claims 1 and 2, **characterised in that** it includes a single buoyancy tank (31).

4. Geophysical measurement device according to Claim 3, **characterised in that** said means forming a device for acquisition and processing of data (24) and said means forming a power-supply source (25) are included in said single buoyancy tank (11).

5. Geophysical measurement device according to either of Claims 1 and 2, **characterised in that** it includes at least two buoyancy tanks (42, 43), said sensor (44), said means forming a device for acquisition and processing of data (25) and said means forming a power-supply source (26) being included in one of said at least two tanks (42, 43).

6. Geophysical measurement device according to either of Claims 1 and 2, **characterised in that** it includes at least two buoyancy tanks (42, 43), said sensor (44), said means forming a device for acquisition and processing of data (25) and said means forming a power-supply source (46) being distributed in at least two of said tanks.

7. Geophysical measurement device according to any one of Claims 1 to 6, **characterised in that** it includes an inclinometer (23) which is integral with said at least one sensor (21).

8. Geophysical measurement device according to any one of Claims 1 to 7, **characterised in that** said tank is obtained from at least one amorphous material.

9. Geophysical measurement device according to any one of Claims 1 to 8, **characterised in that** said means forming a device for acquisition and processing of analogue and/or digital data include means for determining the components of the induction vector.

10. Geophysical measurement device according to Claim 9, **characterised in that** it includes means for transmitting said data and said components of the induction vector to a remote receiver (116).

11. Geophysical measurement device according to either of Claims 9 and 10, **characterised in that** said components of the induction vector are determined for at least two distinct frequencies.

12. Geophysical measurement device according to any one of Claims 1 to 11, **characterised in that** the internal volume of said tank(s) containing said means forming measurement instruments is substantially equal to the volume of said means forming measurement instruments.

## Patentansprüche

1. Geophysikalisches Messgerät (10) zur Erforschung von natürlichen Bodenressourcen im Wasser, umfassend:
- ein Gestell (13), das dazu bestimmt ist, im Wasser stabil auf dem Boden zu ruhen,
- mindestens eine Auftriebskammer (11), die auf diesem Gestell ruht, und
- Messinstrumente bildende Mittel, beinhaltend:
- mindestens einen Aufnehmer (21), der die lokale Messung mindestens einer der Komponenten des Magnetfeldes ermöglicht,
- Mittel, die ein Erfassungs- und Verarbeitungsgerät für analoge und/oder digitale Daten bilden (24), und
- Mittel, die eine Energieversorgungsquelle bilden (25) für den Aufnehmer und die Mittel, die das Datenerfassungs- und -verarbeitungsgerät bilden, **dadurch gekennzeichnet, dass** dieser mindestens eine Aufnehmer (21) in der Auftriebskammer (11) enthalten ist.

2. Geophysikalisches Messgerät nach Anspruch 1, **dadurch gekennzeichnet, dass** der Aufnehmer (21) Mittel zum Messen der drei Komponenten des Magnetfeldes umfasst.

3. Geophysikalisches Messgerät nach einem beliebigen der Ansprüche 1 und 2, **dadurch gekennzeichnet, dass** es eine einzige Auftriebskammer (31) umfasst.

4. Geophysikalisches Messgerät nach Anspruch 3, **dadurch gekennzeichnet, dass** die das Datenerfassungs- und -verarbeitungsgerät bildenden Mittel (24) und die eine Energieversorgungsquelle bildenden Mittel (25) in der einzigen Auftriebskammer (11) enthalten sind.

5. Geophysikalisches Messgerät nach einem beliebigen der Ansprüche 1 und 2, **dadurch gekennzeichnet, dass** es mindestens zwei Auftriebskammern (42, 43) umfasst, wobei der Aufnehmer (44), die das Datenerfassungs- und Verarbeitungsgerät bildenden Mittel (45) und die die Energieversorgungsquelle bildenden Mittel (46) in einer der mindestens zwei Auftriebskammern (42, 43) enthalten sind.

6. Geophysikalisches Messgerät nach einem beliebigen der Ansprüche 1 und 2, **dadurch gekennzeichnet, dass** es mindestens zwei Auftriebskammern (42, 43) umfasst, wobei der Aufnehmer (44), die das Datenerfassungs- und -verarbeitungsgerät bildenden Mittel (45) und die die Energieversorgungsquelle bildenden Mittel (46) auf mindestens zwei der Auftriebskammern verteilt sind.

7. Geophysikalisches Messgerät nach einem beliebigen der Ansprüche 1 bis 6, **dadurch gekennzeichnet, dass** es einen Neigungsmesser (23) umfasst, der fest mit dem mindestens einen Aufnehmer (21) verbunden ist.

8. Geophysikalisches Messgerät nach einem beliebigen der Ansprüche 1 bis 7, **dadurch gekennzeichnet, dass** die Kammer ausgehend von mindestens einem amorphen Material erhalten worden ist.

9. Geophysikalisches Messgerät nach einem beliebigen der Ansprüche 1 bis 8, **dadurch gekennzeichnet, dass** die Mittel, die das Erfassungs- und Verarbeitungsgerät für analoge und/oder digitale Daten bilden, Mittel zum Bestimmen der Komponenten des Induktionsvektors enthalten.

10. Geophysikalisches Messgerät nach Anspruch 9, **dadurch gekennzeichnet, dass** es Mittel zur Übertragung der Daten und der Komponenten des Induktionsvektors zu einem entfernten Empfänger (116) umfasst.

11. Geophysikalisches Messgerät nach einem beliebigen der Ansprüche 9 und 10, **dadurch gekennzeichnet, dass** die Komponenten des Induktionsvektors für mindestens zwei verschiedene Frequenzen bestimmt werden.

12. Geophysikalisches Messgerät nach einem beliebigen der Ansprüche 1 bis 11, **dadurch gekennzeichnet, dass** das Innenvolumen der Kammer oder der Kammern, die die Messinstrumente bildenden Mittel enthalten, in etwa genauso groß wie das Volumen der die Messinstrumente bildenden Mittel ist.
